# NOUVEAU FASCICULE DE BREVET EUROPEEN

(11) **EP 1 686 006 B2**
(45) Date de publication et mention de la décision concernant l'opposition: **20.07.2011**
(45) Mention de la délivrance du brevet: 27.02.2008
(21) Numéro de dépôt: 06290135.0
(22) Date de dépôt: 19.01.2006
(51) Int. Cl.: B60Q 1/08

(54) **Système d'éclairage et/ou de signalisation pour véhicule avec commande d'actionneur perfectionnée**
Beleuchtungs- und/oder Signalisierungseinrichtung für ein Fahrzeug mit einer verbesserten Schaltvorrichtung
Lighting and/or signaling assembly for a vehicle with an improved actuator switch

(30) Priorité: 28.01.2005 FR 0500903
(43) Date de publication de la demande: 02.08.2006
(73) Titulaire: VALEO VISION, 93012 Bobigny Cedex (FR)
(72) Inventeur: Alvarez Garcia, Daniel, 18013 Granada (ES); Poirot, Pascal, 91640 Briis sous Forges (FR)

(56) Documents cités:
- DE-A1- 4 311 669
- US-A- 6 010 237
- US-A1- 2001 019 225
- US-A1- 20030 107 898
- US-B1- 6 357 898

## Description

L'invention concerne de manière générale le domaine de l'éclairage / signalisation pour des véhicules, notamment des véhicules automobiles. Plus particulièrement, l'invention concerne un système d'éclairage et/ou signalisation pour véhicule, comprenant au moins un dispositif d'éclairage et/ou signalisation apte à émettre un faisceau lumineux et équipé d'au moins un actionneur pour le réglage d'un angle du faisceau lumineux, et au moins un dispositif de commande d'actionneur.

L'invention trouve une application privilégiée, mais non exclusive, dans les systèmes d'éclairage et/ou signalisation incluant des actionneurs prévus pour régler l'angle de site des projecteurs en fonction des variations d'assiette du véhicule.

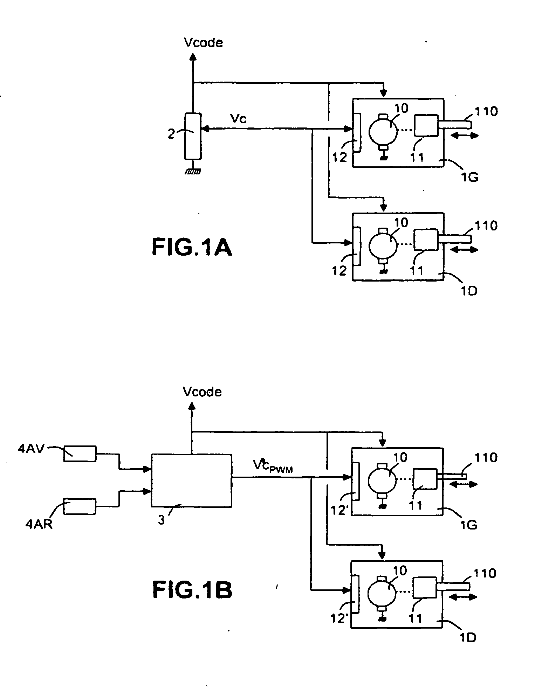

Des actionneurs 1D et 1 G du type indiqué ci-dessus sont montrés schématiquement à la Fig.1A qui représente un premier type de dispositif de commande d'actionneur selon la technique antérieure connue de l'entité inventive. Le dispositif montré à la Fig.1A est conçu pour une correction manuelle de l'angle de site des projecteurs d'éclairage, à partir d'un potentiomètre accessible au conducteur du véhicule.

Les actionneurs 1D et 1 G équipent respectivement les projecteurs d'éclairage droite et gauche du véhicule automobile.

Comme montré à la Fig. 1A, l'actionneur 1D, 1 G, comprend un moteur à courant continu 10, un mécanisme de conversion de mouvement 11 et un circuit de commande de moteur 12.

Le mécanisme de conversion de mouvement 11 est par exemple du type roue / vis-sans-fin ou du type roue / crémaillère. La rotation du moteur 10 commande un mouvement linéaire d'une tige d'actionnement 110 couplée mécaniquement au projecteur d'éclairage, de façon à régler l'angle de site de celui-ci.

Dans ce type de dispositif, la position de la tige est déterminée par la valeur d'une tension de consigne continue Vc appliquée à une entrée du circuit de commande de moteur 12. La tension de consigne Vc est traitée par le circuit de commande de moteur 12 afin de mettre en forme un signal d'attaque adapté au moteur.

La tension de commande Vc est obtenue au moyen d'un potentiomètre de réglage 2 alimenté par une tension continue Vcode. De manière classique, la tension continue Vcode est présente lorsque le commodo de commande d'éclairage est positionné sur « feux de code » ou « feux de route » par le conducteur du véhicule. La tension Vcode est également utilisée comme tension d'alimentation des actionneurs 1 D et 1 G.

Dans ce premier type de dispositif de commande d'actionneur selon la technique antérieure, la tension de consigne Vc est appliquée aux actionneurs 1 D, 1 G pendant toute la durée d'éclairage des projecteurs en « feux de code » ou « feux de route » et sa valeur est prise en compte pendant toute cette durée pour la commande des actionneurs 1 D, 1 G. Il en découle que des fluctuations de la tension de consigne Vc, dues par exemple à des signaux parasites électriques ou électromagnétiques, se répercutent en permanence sur les actionneurs 1 D, 1 G et commandent des déplacements indésirables de ceux-ci.

Ces déplacements indésirables des actionneurs ont des répercutions négatives sur leur durée de vie et peuvent conduirent à des réglages de l'angle de site non conformes à la réglementation.

Un second type de dispositif de commande d'actionneur selon la technique antérieure connue de l'entité inventive est représenté à la Fig. 1B. Le dispositif représenté est conçu pour une correction automatique de l'angle de site des projecteurs d'éclairage.

Dans ce second type de dispositif, les actionneurs 1 D et 1 G ne sont plus commandés par une tension de consigne continue mais par un signal de commande impulsionnel Vc_{pwm} de type à modulation de largeur d'impulsion. Le signal de commande Vc_{pwm} est traité par un circuit de commande de moteur 12' apte à mettre en forme un signal d'attaque adapté au moteur. De même que dans le dispositif de la Fig.1A, les actionneurs 1D et 1 G sont alimentés par la tension continue Vcode.

Dans le dispositif de la Fig.1B, le signal de commande Vc_{pwm} est produit par un circuit de commande de correction 3 à partir de capteurs d'assiette avant 4AV et arrière 4AR couplés par exemple aux essieux du véhicule. Le circuit de commande de correction 3 est alimenté par la tension continue Vcode.

Ce second type de dispositif, du fait de la modulation de largeur d'impulsion du signal de commande Vc_{pwm}, apporte une meilleure résistance aux parasites électriques et électromagnétiques, par rapport au dispositif de la Fig.1A. Cependant, une telle solution technique ne permet pas toujours de satisfaire aux contraintes accrues de fiabilité et de durée de vie qui s'appliquent aux projecteurs dans le domaine automobile.

La présente invention vise à remédier aux inconvénients exposés ci-dessus de la technique antérieure en fournissant un système d'éclairage et/ou signalisation pour véhicule incorporant une commande d'actionneur perfectionnée conçue pour une plus grande fiabilité et une durée de vie accrue.

Le système d'éclairage et/ou signalisation pour véhicule, notamment véhicule automobile, selon l'invention comprend au moins un dispositif d'éclairage et/ou signalisation apte à émettre au moins un faisceau lumineux et équipé d'au moins un actionneur pour le réglage d'un angle du faisceau lumineux, et au moins un dispositif de commande d'actionneur pour commander l'actionneur. Conformément à l'invention, le dispositif de commande d'actionneur est défini dans la revendication 1.

De préférence, les moyens de commutation comprennent un interrupteur commandable. Selon un mode de réalisation particulier, cet interrupteur commandable fait appel à un transistor de type MOS. Selon un autre mode de réalisation particulier, cet interrupteur commandable fait appel à un circuit commutateur de type SmartMOS.

Selon encore une autre caractéristique particulière, les moyens de commande comprennent des moyens de mémorisation pour mémoriser la valeur précédente de l'information de consigne, et des moyens de comparaison pour comparer les valeurs courante et précédente de l'information de consigne et commander la transmission de l'information de consigne active à l'actionneur lorsqu'une différence est détectée entre les valeurs courante et précédente. De préférence, les moyens de comparaison sont aptes à commander la transmission de l'information de consigne active à l'actionneur lorsque la différence détectée est supérieure à un seuil prédéterminé.

Selon un mode de réalisation particulier, le dispositif de commande d'actionneur est réalisé au moins partiellement à l'aide d'amplificateurs opérationnels.

Selon un autre mode de réalisation particulier, le dispositif de commande d'actionneur est intégré au moins partiellement dans un contrôleur du système. De préférence, le dispositif de commande d'actionneur est implémenté dans le contrôleur au moins partiellement à l'aide d'instructions de programme.

Selon un mode de réalisation particulier de l'invention, l'actionneur comprend un moteur à courant continu.

D'autres aspects et avantages de la présente l'invention apparaîtront plus clairement à la lecture de la description de modes de réalisation particuliers qui va suivre, cette description étant donnée à titre d'exemple non limitatif et faite en référence aux dessins annexés, dans lesquels :
la Fig. 1A montre un premier type de commande d'actionneur selon la technique antérieure ;
la Fig. 1B montre un second type de commande d'actionneur selon la technique antérieure ;
la Fig.2 montre de manière schématique les moyens de commande d'actionneur inclus dans un système d'éclairage et/ou signalisation selon l'invention ; et
la Fig.3 est un algorithme montrant le principe de fonctionnement des moyens de commande d'actionneur de la Fig.2.

L'invention est maintenant décrite essentiellement dans le cadre d'un mode de réalisation particulier d'un système selon l'invention dans lequel des actionneurs couplés aux projecteurs sont prévus afin de régler l'angle de site de ceux-ci.

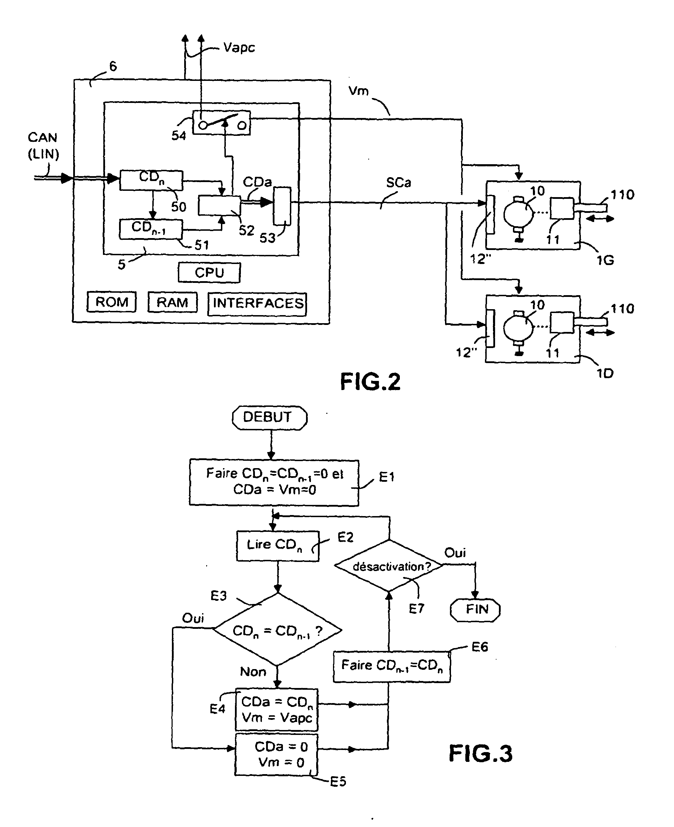

Comme montré à la Fig.2, le dispositif de commande d'actionneur selon l'invention, désigné globalement par le repère 5, est relié aux actionneurs 1 D et 1 G des projecteurs d'éclairage (non représentés) et reçoit en entrée une information de consigne CD.

Comme cela apparaîtra plus clairement par la suite, l'information de consigne CD fournie au dispositif de commande d'actionneur selon l'invention peut se présenter sous différentes formes, par exemple, sous la forme d'une tension continue dont le niveau est représentatif de l'information de consigne CD, d'un signal modulé en largeur d'impulsion (PWM), d'une donnée numérique ou autres.

Dans ce mode de réalisation, les actionneurs 1D et 1 G sont analogues à ceux décrits plus haut en référence aux Figs.1A et 1B et ne seront donc pas détaillés ici de nouveau.

On notera cependant que l'invention s'applique aussi bien à des actionneurs du type à commande directe du moteur qu'à des actionneurs du type à commande asservie du moteur.

De plus, les actionneurs 1D et 1 G comprennent chacun un circuit de commande de moteur 12" adapté à une connexion avec le dispositif de commande d'actionneur 5 selon l'invention.

Le circuit 12" comporte des moyens pour recevoir un signal de transmission de commande d'actionneur SCa fourni par le dispositif 5 et alimenter le moteur 10 de manière à obtenir l'angle de site correspondant à l'information de réglage contenue dans le signal SCa.

Le circuit 12" ne sera pas décrit davantage ici, sachant que sa conception est dans les compétences de l'homme du métier éclairé par les enseignements contenus dans la présente demande.

Avantageusement, le dispositif 5 selon l'invention pourra être implémenté essentiellement sous forme logicielle dans un contrôleur 6 du véhicule. Dans un tel cas, le contrôleur 6 comprendra notamment une unité centrale CPU, des mémoires morte ROM et vive RAM, des interfaces et différents circuits et moyens de traitement de signal.

Le dispositif de commande d'actionneur selon l'invention peut aussi être réalisé sous une forme essentiellement analogique, par exemple à l'aide d'amplificateurs opérationnels, et cela à un coût réduit.

Comme cela apparaîtra plus clairement par le suite, certains circuits, moyens et interfaces du contrôleur 6 pourront être dédiés plus particulièrement au dispositif 5 selon l'invention et comprendront par exemple, comme représenté à la Fig.2, un modulateur de largeur d'impulsion (PWM) 53 et un interrupteur de puissance 54. Bien entendu, d'autres types de circuits pourront être prévus, comme par exemple un générateur de niveau continu lorsque le signal de transmission de commande d'actionneur SCa est un signal analogique dont le niveau constitue l'information pertinente pour la commande des actionneurs.

Dans le mode de réalisation de la Fig.2, le dispositif 5 selon l'invention comprend des registres 50 et 51, un comparateur 52, le modulateur PWM 53 et l'interrupteur de puissance 54. Bien entendu, les fonctions des éléments 50, 51 et 52 peuvent avantageusement être implémentées dans le contrôleur 6 au moyen de la mémoire RAM et d'instructions de programme reconnaissables par l'unité centrale CPU afin notamment d'exécuter des opérations de lecture/écriture et de comparaison.

Toujours dans ce mode de réalisation, le contrôleur 6 est connecté à un bus CAN ou LIN du véhicule à travers lequel le dispositif 5 selon l'invention reçoit l'information de consigne CD destinée à la commande des actionneurs 1D et 1 G. Afin de ne pas surcharger inutilement la Fig.2, il est considéré ici que les différents moyens nécessaires dans le contrôleur pour gérer les communications avec le bus CAN ou LIN sont inclus dans le module désigné INTERFACES.

En variante, l'information de consigne CD peut ne pas être reçue directement par le contrôleur 6 comme indiqué ci-dessus, mais être calculée par celui-ci à partir d'informations de mesure transmises à travers le bus CAN ou LIN par des capteurs d'assiette du véhicule.

Selon encore une autre variante, l'information de consigne CD ou les informations de mesure provenant des capteurs d'assiette peuvent être fournies au contrôleur 6 sous la forme de tensions continues qui sont ensuite numérisées par des moyens de conversion analogique/numérique inclus dans le micocontrôleur 6.

Le fonctionnement du dispositif 5 selon l'invention est maintenant décrit en référence également à l'algorithme de la Fig.3.

L'algorithme de la Fig.3 comprend des étapes E1 à E7.

Dans le dispositif 5 selon l'invention, les registres 50 et 51 montrés à la Fig.2 sont prévus pour mémoriser des valeurs CDₙ et CDₙ₋₁ de l'information de consigne CD, CDₙ étant la valeur courante de CD à un temps n et CDₙ₋₁ étant la valeur de CD à un temps précédent n-1.

L'activation du dispositif 5 selon l'invention commence par l'exécution de l'étape E1 lors de laquelle les valeurs CDₙ et CDₙ₋₁ contenues dans les registres 50 et 51 sont initialisées à des valeurs inactives. Afin d'éviter des déplacements inutiles des actionneurs, et par sécurité également, une information de commande d'actionneur CDa et une tension d'alimentation Vm sont de préférence initialisées aussi à des valeurs inactives.

Les étapes E2 à E7 sont exécutées à chaque boucle de traitement de l'algorithme afin de déterminer à partir de l'information de consigne CD l'information de commande d'actionneur CDa à transmettre aux actionneurs 1D et 1G.

A l'étape E2, la valeur courante CDₙ de l'information de consigne CD est lue et stockée dans le registre 50.

A l'étape E3, le comparateur 52 effectue une comparaison entre les valeurs courante CDₙ et précédente CDₙ₋₁ de l'information de consigne CD. Les valeurs CDₙ et CDₙ₋₁ sont lues dans les registres 50 et 51, respectivement.

Lorsque les valeurs CDₙ et CDₙ₋₁ sont déterminées à l'étape E3 comme étant différentes, le comparateur 52 délivre, étape E4, une information de commande d'actionneur CDa ayant pour valeur CDₙ. L'information CDa = CDₙ est ensuite transmise aux actionneurs 1 D et 1 G au moyen du signal de transmission de commande d'actionneur SCa, de manière à commander un déplacement de la tige d'actionnement 110 jusqu'à une position correspondant à la valeur CDₙ.

Conformément à l'invention, le signal SCa peut se présenter sous différentes formes. Dans le mode de réalisation préféré de la Fig.2, le signal SCa est modulé en largeur d'impulsion avec l'information de commande d'actionneur CDₙ par le modulateur PWM 53.

Lorsque les valeurs CDₙ et CDₙ₋₁ sont déterminées comme étant égales à l'étape E3, le comparateur 52 délivre, étape E5, une information de commande d'actionneur CDa ayant une valeur inactive, par exemple, « 0 ». L'information CDa = 0 est ensuite transmise aux actionneurs 1 D et 1 G de la même manière que celle décrite ci-dessus pour CDa = CDₙ. L'information CDa = 0 ne commande aucune rotation des moteurs 10 et les tiges d'actionnement 110 restent donc à leur position.

Notons ici que la détermination de différence / égalité effectuée par le comparateur 53 intègre la prise en compte d'une marge déterminée, et que les termes « différentes » et « égales » appliqués ci-dessus aux valeurs CDₙ et CDₙ₋₁ ne doivent être interprétés de manière stricte. En d'autres termes, conformément à un mode de réalisation particulier de l'invention, la valeur courante CDₙ est déterminée comme étant différente de la valeur précédente CDₙ₋₁ si la différence en valeur absolue dépasse un certain seuil. Dans le cas contraire, les valeurs CDₙ et CDₙ₋₁ sont déterminées comme étant égales.

En référence toujours aux Figs.2 et 3, l'étape E6 exécutée après l'étape E4 ou E5 correspond à la mémorisation dans le registre 51 de la valeur courante CDₙ. La valeur CDₙ mémorisée dans le registre 51 devient ainsi la valeur CDₙ₋₁ prise en compte dans la boucle suivante. De préférence, cette étape de mémorisation E6 est effectuée après un certain temps de temporisation de manière à tenir compte du temps nécessaire aux actionneurs pour atteindre la position de consigne.

L'étape E7 met fin à l'exécution de l'algorithme et désactive le dispositif 5 selon l'invention, par exemple lorsqu'une commande d'arrêt de l'éclairage est détectée par le contrôleur 6.

Conformément à l'invention, les actionneurs 1D et 1 G sont alimentés uniquement lorsque le signal SCa transporte une information de commande d'actionneur CDa ayant une valeur active, c'est-à-dire, une valeur différente de « 0 », dans cet exemple, apte à commander une rotation des moteurs 10. Cette fonctionnalité de l'invention est implantée dans le dispositif 5 au moyen de l'interrupteur de puissance 54.

Dans le mode de réalisation des Figs.2 et 3, l'interrupteur de puissance 54 est par exemple constitué d'un transistor de type MOS intégré dans le contrôleur 6. L'interrupteur 54 comporte une première borne reliée à une tension d'alimentation Vapc et une seconde borne qui est reliée à un fil du réseau électrique du véhicule afin d'alimenter les actionneurs 1D et 1 G avec une tension d'alimentation Vm.

L'interrupteur 54 est commandé en ouverture / fermeture par le comparateur 52.

Lorsque l'étape E4 de l'algorithme de la Fig.3 est exécutée, l'interrupteur 54 est commandée en fermeture et la tension d'alimentation Vm = Vapc est fournie aux actionneurs 1D et 1 G. L'information de commande d'actionneur CDa transmise aux actionneurs 1 D et 1 G est alors active et l'alimentation de ceux-ci rend possible la rotation des moteurs 10.

Lorsque l'étape E5 est exécutée, l'information de commande d'actionneur CDa transmise aux actionneurs 1 D et 1 G est inactive, CDa=0, empêchant ainsi tout déplacement indésirable des actionneurs 1 D et 1 G.

De plus, à l'étape E5, comme montré à la Fig.3, l'interrupteur 54 peut être commandé en ouverture et la tension d'alimentation Vm = 0 V est alors fournie aux actionneurs 1 D et 1 G. En effet, dans la situation de la fourniture aux actionneurs 1D et 1 G d'une information CDa inactive, le maintien de la tension Vm est inutile. Dans un tel cas, la mise à 0 V de la tension Vm apporte une garantie supplémentaire de non déplacement des actionneurs 1D et 1 G et peut contribuer à limiter la consommation de courant.

Dans ce mode de réalisation incorporant l'interrupteur 54, la tension d'alimentation Vapc peut être la tension «après contact» du véhicule, c'est-à-dire, une tension présente dans le réseau électrique du véhicule après l'actionnement par le conducteur de la clé de contact. En effet, l'interrupteur 54, en limitant au strict minimum l'application de la tension Vapc aux actionneurs, permet une meilleure satisfaction aux contraintes de durée de vie des actionneurs sans qu'il soit nécessaire pour cela d'utiliser la tension Vcode du véhicule. Outre l'amélioration sensible en termes de durée de vie, l'incorporation de l'interrupteur 54 peut aussi avoir un impact sur la réduction du nombre des fils de connexion nécessaires au dispositif d'éclairage du véhicule.

Dans un autre mode de réalisation particulier de l'invention, l'interrupteur 54 peut prendre la forme d'un circuit commutateur de type SmartMOS capable de remplir des fonctions intelligentes telles que par exemple la détection d'un défaut sur le fil électrique d'alimentation ou la mesure du courant électrique consommé. Le circuit commutateur SmartMOS fournit ainsi au système d'éclairage et/ou signalisation du véhicule des informations que celui-ci peut avantageusement exploiter pour remplir les taches qui lui incombent.

Bien entendu, la présente invention ne se limite pas aux détails des modes de réalisation décrits ici à titre d'exemple, mais s'étend au contraire aux modifications à la portée de l'homme du métier sans sortir du cadre de l'invention défini dans les revendications.

Ainsi, par exemple, le dispositif de commande d'actionneur pourra dans certaines applications être associé en sortie à des moyens d'interfaçage avec une liaison de type LIN, de manière à transmettre l'information de commande d'actionneur CDa jusqu'aux actionneur à travers cette liaison LIN.

De plus, l'homme du métier pourra utiliser la présente invention pour commander des actionneurs autres que ceux dédiés au réglage de l'angle de site des projecteurs d'éclairage, par exemple, dans certaines applications, ceux utilisés dans la fonction « code virage » ou DBL (pour « Dynamic Bending Light » en anglais).

## Revendications

1. Système d'éclairage et/ou signalisation pour véhicule, notamment automobile, comprenant au moins un dispositif d'éclairage et/ou signalisation apte à émettre au moins un faisceau lumineux et équipé d'au moins un actionneur (12") pour le réglage d'un angle dudit faisceau lumineux, et au moins un dispositif de commande d'actionneur (6) pour commander ledit actionneur (12"), **caractérisé en ce que** ledit dispositif de commande d'actionneur (6) comprend :
- des moyens de commande (5, 50, 51, 52) aptes à transmettre une information de consigne active (CDa = CDₙ) audit actionneur (12") uniquement lorsqu'une valeur courante (CDₙ) de ladite information de consigne diffère sensiblement d'une valeur précédente (CDₙ₋₁) de ladite information de consigne,
**caractérisé en ce que** ledit dispositif de commande d'actionneur (6, 5) comprend également :
- des moyens de commutation (54) aptes à interrompre une alimentation électrique dudit actionneur (12") lorsque aucune information de consigne active n'est transmise audit actionneur (12") par lesdits moyens de commande (5, 50, 51, 52).

2. Système d'éclairage et/ou signalisation selon la revendication 1, **caractérisé en ce que** lesdits moyens de commutation (54) comprennent un interrupteur commandable tel qu'un transistor de type MOS.

3. Système d'éclairage et/ou signalisation selon la revendication 1, **caractérisé en ce que** lesdits moyens de commutation (54) comprennent un interrupteur commandable tel qu'un circuit commutateur de type SmartMOS.

4. Système d'éclairage et/ou signalisation selon l'une quelconque des revendications 1 à 3, **caractérisé en ce que** lesdits moyens de commande (5, 50, 51, 52) comprennent :
des moyens de mémorisation (51) pour mémoriser ladite valeur précédente (CDₙ₋₁) de ladite information de consigne ; et
des moyens de comparaison (52) pour comparer lesdites valeurs courante (CDₙ) et précédente (CDₙ₋₁) de ladite information de consigne et commander la transmission de ladite information de consigne active (CDa=CDₙ) audit actionneur (12") lorsqu'une différence est détectée entre lesdites valeurs courante (CDₙ) et précédente (CDₙ₋₁).

5. Système d'éclairage et/ou signalisation selon la revendication 4, **caractérisé en ce que** lesdits moyens de comparaison (52) sont aptes à commander la transmission de ladite information de consigne active (CDa=CDₙ) audit actionneur (12") lorsque ladite différence détectée est supérieure à un seuil prédéterminé.

6. Système d'éclairage et/ou signalisation selon l'une quelconque des revendications 1 à 4, **caractérisé en ce que** ledit dispositif de commande d'actionneur (6, 5) comprend également des moyens d'interfaçage avec une liaison de type CAN ou LIN.

7. Système d'éclairage et/ou signalisation selon l'une quelconque des revendications 1 à 6, **caractérisé en ce que** ledit dispositif de commande d'actionneur (6, 5) est réalisé au moins partiellement à l'aide d'amplificateurs opérationnels.

8. Système d'éclairage et/ou signalisation selon l'une quelconque des revendications 1 à 7, **caractérisé en ce que** ledit dispositif de commande d'actionneur (5) est intégré au moins partiellement dans un contrôleur (6) dudit système.

9. Système d'éclairage et/ou signalisation selon la revendication 8, **caractérisé en ce que** ledit dispositif de commande d'actionneur (5) est implémenté dans ledit contrôleur (6) au moins partiellement à l'aide d'instructions de programme.

10. Système d'éclairage et/ou signalisation selon l'une quelconque des revendications 1 à 9, **caractérisé en ce que** ledit actionneur (12") comprend un moteur à courant continu (10).

## Claims

1. Lighting and/or signalling system for a vehicle, in particular a motor vehicle, comprising at least one lighting and/or signalling device which can emit at least one light beam and is equipped with at least one actuator (12") for regulation of an angle of the said light beam, and at least one actuator control device (6) to control the said actuator (12"), **characterised in that** the said actuator control device (6) comprises:
- control means (5, 50, 51, 52) which can transmit active order information (CDa = CDₙ) to the said actuator (12") only when a current value (CDₙ) of the said order information differs substantially from a preceding value (CDₙ₋₁) of the said order information, **characterised in that** the said actuator control device (6, 5) also comprises:
- switching means (54) which can interrupt an electrical supply of the said actuator (12") when no order information is transmitted to the said actuator (12") by the said control means (5, 50, 51, 52).

2. Lighting and/or signalling system according to claim 1, **characterised in that** the said switching means (54) comprise a controllable switch such as a transistor of the MOS type.

3. Lighting and/or signalling system according to claim 1, **characterised in that** the said switching means (54) comprise a controllable switch such as a switching circuit of the SmartMOS type.

4. Lighting and/or signalling system according to any one of claims 1 to 3, **characterised in that** the said control means (5, 50, 51, 52) comprise:
storage means (51) to store the said preceding value (CDₙ₋₁) of the said order information; and
comparison means (52) to compare the said current (CDₙ) and preceding (CDₙ₋₁) values of the said order information and to command transmission of the said active order information (CDa=CDₙ) to the said actuator (12") when a difference is detected between the said current (CDₙ) and preceding (CDₙ₋₁) values.

5. Lighting and/or signalling system according to claim 4, **characterised in that** the said comparison means (52) can command transmission of the said active order information (CDa=CDₙ) to the said actuator (12") when the said difference detected is greater than a predetermined threshold.

6. Lighting and/or signalling system according to any one of claims 1 to 4, **characterised in that** the said actuator control device (6, 5) also comprises means for interfacing with a connection of the CAN or LIN type.

7. Lighting and/or signalling system according to any one of claims 1 to 6, **characterised in that** the said actuator control device (6, 5) is created at least partially by means of operational amplifiers.

8. Lighting and/or signalling system according to any one of claims 1 to 7, **characterised in that** the said actuator control device (5) is integrated at least partially in a controller (6) of the said system.

9. Lighting and/or signalling system according to claim 8, **characterised in that** the said actuator control device (5) is implemented in the said controller (6) at least partially by means of programme instructions.

10. Lighting and/or signalling system according to any one of claims 1 to 9, **characterised in that** the said actuator (12") comprises a direct current motor (10).

## Patentansprüche

1. Beleuchtungs- und/oder Signalisierungseinrichtung für Fahrzeuge, insbesondere Kraftfahrzeuge, mit wenigstens einer Beleuchtungs- und/oder Signalisierungsvorrichtung, die wenigstens ein Lichtbündel auszusenden vermag und mit wenigstens einem Stellglied (12") zum Einstellen eines Winkels des Lichtbündels versehen ist, und mit wenigstens einer Stellgliedsteuerungsvorrichtung (6) zum Steuern des Stellglieds (12"),
**dadurch gekennzeichnet, dass** die Stellgliedsteuerungsvorrichtung (6) umfasst:
- Steuermittel (5, 50, 51, 52), die eine aktive Soll-Information (Cda=CDₙ) nur dann an das Stellglied (12") zu übertragen vermögen, wenn ein aktueller Wert (CDₙ) der Soll-Information wesentlich von einem vorhergehenden Wert (CDₙ₋₁) der Soll-Information abweicht,
**dadurch gekennzeichnet, dass** die Stellgliedsteuerungsvorrichtung (6, 5) zudem umfasst:
- Schaltmittel (54), die eine Stromversorgung des Stellglieds (12") zu unterbrechen vermögen, wenn an das Stellglied (12") keine aktive Soll-Information durch die Steuermittel (5, 50, 51, 52) übertragen wird.

2. Beleuchtungs- und/oder Signalisierungseinrichtung nach Anspruch 1,
**dadurch gekennzeichnet, dass** die Schaltmittel (54) einen steuerbaren Schalter wie etwa einen MOS-Transistor umfassen.

3. Beleuchtungs- und/oder Signalisierungseinrichtung nach Anspruch 1,
**dadurch gekennzeichnet, dass** die Schaltmittel (54) einen steuerbaren Schalter wie etwa einen SmartMOS-Schaltkreis umfassen.

4. Beleuchtungs- und/oder Signalisierungseinrichtung nach einem der Ansprüche 1 bis 3,
**dadurch gekennzeichnet, dass** die Steuermittel (5, 50, 51, 52) umfassen:
- Speichermittel (51) zum Speichern des vorhergehenden Wertes (CDₙ₋₁) der Soll-Information; und
- Vergleichsmittel (52) zum Vergleichen des aktuellen (CDₙ) Wertes mit dem vorhergehenden (CDₙ₋₁) Wert der Soll-Information und zum Steuern der Übertragung der aktiven Soll-Information (Cda=CDₙ) an das Stellglied (12"), wenn zwischen dem aktuellen (CDₙ) und dem vorhergehenden (CDₙ₋₁) Wert ein Unterschied festgestellt wird.

5. Beleuchtungs- und/oder Signalisierungseinrichtung nach Anspruch 4,
**dadurch gekennzeichnet, dass** die Vergleichsmittel (52) die Übertragung der aktiven Soll-Information (Cda=CDₙ) an das Stellglied (12") zu steuern vermögen, wenn der festgestellte Unterschied über einem vorbestimmten Schwellenwert liegt.

6. Beleuchtungs- und/oder Signalisierungseinrichtung nach einem der Ansprüche 1 bis 4,
**dadurch gekennzeichnet, dass** die Stellgliedsteuerungsvorrichtung (6, 5) ferner Schnittstellenmittel mit einem CAN- oder LIN-Anschluss umfasst.

7. Beleuchtungs- und/oder Signalisierungseinrichtung nach einem der Ansprüche 1 bis 6,
**dadurch gekennzeichnet, dass** die Stellgliedsteuerungsvorrichtung (6, 5) wenigstens teilweise mit Hilfe von Operationsverstärkern ausgeführt ist.

8. Beleuchtungs- und/oder Signalisierungseinrichtung nach einem der Ansprüche 1 bis 7,
**dadurch gekennzeichnet, dass** die Stellgliedsteuerungsvorrichtung (5) wenigstens teilweise in einen Kontroller (6) der Einrichtung integriert ist.

9. Beleuchtungs- und/oder Signalisierungseinrichtung nach Anspruch 8,
**dadurch gekennzeichnet, dass** die Stellgliedsteuerungsvorrichtung (5) in den Kontroller (6) wenigstens teilweise mittels Programmbefehlen eingebaut ist.

10. Beleuchtungs- und/oder Signalisierungseinrichtung nach einem der Ansprüche 1 bis 9,
**dadurch gekennzeichnet, dass** das Stellglied (12") einen Gleichstrommotor (10) umfasst.
